Europäisches Patentamt

(19) European Patent Office

Office européen des brevets

(11) Numéro de publication: **0 219 521**
**B1**

(12) FASCICULE DE BREVET EUROPEEN

(45) Date de publication du fascicule du brevet:
14.09.88

(51) Int. Cl.⁴: **B 01 D 53/04**

(21) Numéro de dépôt: 86902427.3

(22) Date de dépôt: 22.04.86

(86) Numéro de dépôt international:
PCT/FR 86/00132

(87) Numéro de publication internationale:
WO 86/06295 (06.11.86 Gazette 86/24)

(54) **PROCEDE ET INSTALLATION D'EPURATION PAR ADSORPTION SUR CHARBON ACTIF, ET POT ADSORBEUR CORRESPONDANT.**

(30) Priorité: 25.04.85 FR 8506305

(43) Date de publication de la demande:
29.04.87 Bulletin 87/18

(45) Mention de la délivrance du brevet:
14.09.88 Bulletin 88/37

(84) Etats contractants désignés:
AT BE CH DE FR GB IT LI LU NL SE

(56) Documents cités:
DE - C - 411 636
FR - A - 1 003 705
FR - A - 1 298 651
GB - A - 283 508
US - A - 1 661 104
US - A - 3 224 168
US - A - 4 425 142

(73) Titulaire: L'AIR LIQUIDE, SOCIETE ANONYME POUR L'ETUDE ET L'EXPLOITATION DES PROCEDES GEORGES CLAUDE, 75, Quai d'Orsay, F-75321 Paris Cédex 07 (FR)

(72) Inventeur: GODINO, Claude, Chemin des Tieres, Castel Novel 8 F-38330 Biviers (FR)
Inventeur: DUVAL, Philippe, 9, allée Sully, F-38130 Echirolles (FR)
Inventeur: GHNASSIA-DAUDIN, Benoît, Lotissement les Fresnes, La Malhaussane F-38340 Voreppe (FR)

(74) Mandataire: Jacobson, Claude et al, L'AIR LIQUIDE, SOCIETE ANONYME POUR L'ETUDE ET L'EXPLOITATION DES PROCEDES GEORGES CLAUDE 75, quai d'Orsay, F-75321 Paris Cédex 07 (FR)

**Description**

La présente invention est relative à un procédé d'épuration d'un gaz par adsorption sur charbon actif. Elle s'applique en particulier à l'épuration d'air ou d'azote contenant un solvant et provenant par exemple d'une machine de dégraissage.

L'épuration par adsorption sur charbon actif est largement utilisée, et le charbon actif est généralement régénéré par de la vapeur d'eau. Cependant, cette technique présente des inconvénients majeurs pour la désorption de solvants miscibles à l'eau, car une rectification est ensuite nécessaire pour récupérer le solvant, et pour la désorption des solvants chlorés, car la vapeur d'eau régit sur ces solvants pour produire de l'acide chlorhydrique, qui les rend inutilisables. De plus, quel que soit le solvant, la régénération à la vapeur est très coûteuse en énergie.

Il est connu par ailleurs d'épurer les gaz en les faisant passer dans un piège frigorifique qui sépare l'impureté, notamment le solvant, par condensation. Toutefois, lorsque la teneur du gaz en impureté est faible, ceci conduit à des investissements et é un coût de fonctionnement élevés, car il faut faire circuler et refroidir la totalité du débit de gaz à traiter.

L'invention a pour but de permettre la récupération de l'impureté dans des conditions économiquement acceptables industriellement.

A cet effet, l'invention a pour objet un procédé d'épuration d'un gaz par adsorption sur charbon actif, caractérisé en ce qu'on désorbe le charbon actif en faisant passer un courant de gaz inerte à travers le charbon actif puis dans un piège frigorifique maintenu à une température de condensation de l'impureté du gaz traité et refroidi par vaporisation dudit gaz inerte stocké sous forme liquide, une partie au moins du gaz inerte ainsi vaporisé étant utilisé pour effectuer la désorption du charbon actif.

Suivant un mode de mise en oeuvre avantageux, la désorption comprend une phase de préchauffage dans laquelle on fait circuler une charge de gaz inerte en boucle fermée à travers le charbon actif jusqu'à ce que sa teneur en impureté atteigne un seuil prédéterminé, et une phase d'élution dans laquelle on fait circuler du gaz inerte à travers le charbon actif et on l'envoie vers le piège frigorifique.

L'invention a également pour objet une installation destinée à la mise en oeuvre d'un tel procédé. Cette installation, du type comprenant un pot adsorbeur empli de charbon actif, est caractérisée en ce qu'elle comprend des moyens pour vaporiser un gaz inerte liquéfié, des moyens d'alimentation du pot adsorbeur avec une partie au moins du gaz inerte ainsi vaporisé, et des moyens pour refroidir le gaz sortant dudit pot par échange de chaleur avec le gaz inerte en cours de vaporisation.

L'invention a encore pour objet un pot adsorbeur à charbon actif qui convient particulièrement bien pour une telle installation. Ce pot adsorbeur est caractérisé en ce qu'il comprend des tubes d'échange de chaleur disposés longitudinalement dans le pot et munis d'ailettes longitudinales, ces tubs étant montés en série avec des moyens de circulation de fluide disposés dans la paroi latérale du pot adsorbeur.

Un exemple de mise en oeuvre de l'invention va maintenant être décrit en regard des dessins annexés, sur lesquels:

la figure 1 représente schématiquement une installation d'épuration conforme à l'invention;

la figure 2 représente schématiquement une variante du pot adsorbeur de cette installation; et

la figure 3 est une vue prise en coupe suivant la ligne III-III de la figure 2.

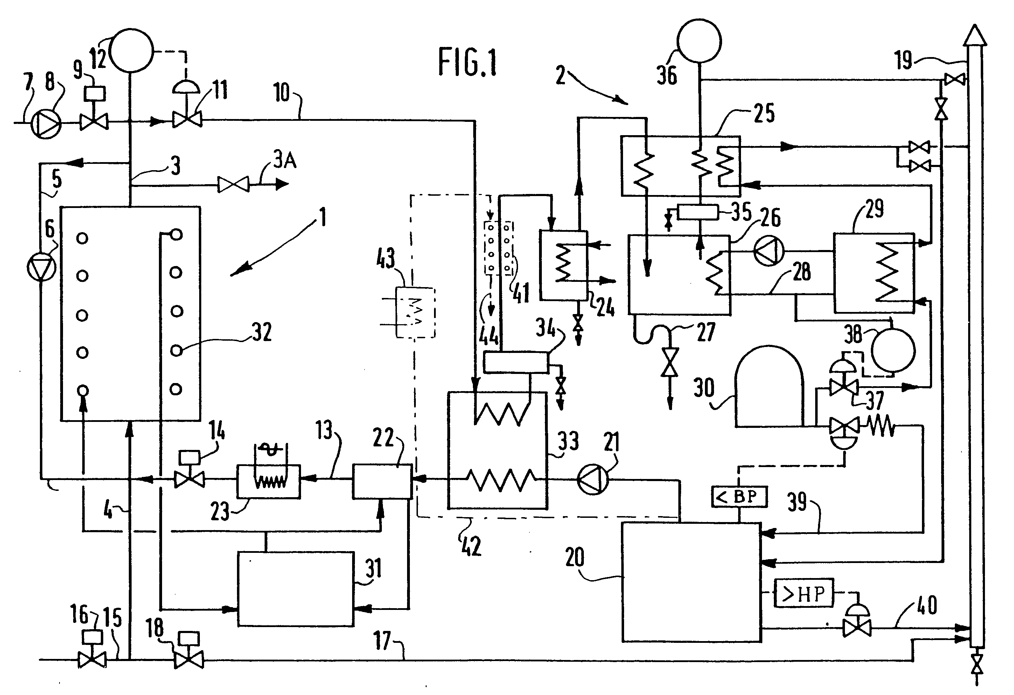

L'installation représentée à la figure 1 et destinée à réaliser l'épuration d'un flux gazeux, en pratique d'un flux d'air ou d'azote contenant un solvant sous forme gazeuse, par exemple un solvant chloré. Ce flux provient d'une machine (non représentée) utilisant ce solvant, laquelle est par exemple une machine de dégraissage. L'installation comprend essentiellement un pot adsorbeur 1 et un piège frigorifique 2.

Le pot 1, cylindrique d'axe vertical, est empli de charbon actif; à ses deux extrémités sont reliées respectivement une conduite supérieure 3 et une conduite inférieure 4, lesquelles sont reliées entre elles par une conduite 5 équipée d'un ventilateur 6 pour former une boucle fermée.

A la conduite 3 se raccordent une conduite 7 d'arrivée de gaz à épurer, munie d'un ventilateur 8 et d'une vanne d'arrêt 9, et une conduite de purge 10 menant au piège 2; cette conduite 10 est commandée par une vanne 11 pilotée par un analyseur 12 du gaz contenu dans la conduite 3.

A la conduite 4 se raccordent une conduite 13 d'amenée d'azote de désorption, commandée par une vanne d'arrêt 14, une conduite 15 de recyclage du gaz épuré munie d'une vanne d'arrêt 16 et une conduite 17 d'évacuation pourvu d'une vanne d'arrêt 18 débouchant dans une cheminée 19. La conduite 13 provient d'une capacité tampon 20 contenant de l'azote gazeux à la température ambiante et est équipée d'un ventilateur 21, d'un pré-réchauffeur 22 et d'un réchauffeur final électrique 23.

Le piège frigorifique 2, qui est dans cet exemple un piège cryogénique, comprend essentiellement un échangeur de pré-refroidissement à eau 24, un échangeur de refroidissement 25 et un échangeur cryogénique 26 pourvu d'une conduite de purge 27 pour la récupération du solvant. L'échangeur 26 est réfrigéré par un fluide intermédiaire circulant dans une boucle fermée 28 et refroidi par vaporisation dans un échangeur de chaleur 29 d'azote liquide provenant d'un stockage 30.

L'installation comprend encore une centrale 31 de production d'eau chaude, de vapeur d'eau ou d'un autre fluide chaud, alimentant d'une part le pré-réchauffeur 22, d'autre part un serpentin de chauffage 32 disposé dans le pot adsorbeur 1 au sein du charbon actif. L'installation comprend aussi un échangeur de chaleur de récupération 33 qui met en relation d'échange thermique la conduite 10 avec la conduite 13, entre la capacité 20 et le pré-réchauffeur 22. Par ailleurs, les parties de l'installation qui fonctionnent loin de la température ambiante sont convenablement calorifugées.

Le fonctionnement de cette installation va être décrit ci-dessous en supposant qu'elle comprend un unique pot adsorbeur 1. Cependant, on comprend qu'en pratique l'installation comportera généralement plusieurs pots adsorbeurs ayant des cycles de fonctionnement décalés dans le temps.

**1. *Phase d'adsorption***

Le gaz à traiter est introduit à la température ambiante par les conduites 7 et 3 dans le de pot 1, en ressort épuré par la conduite 4 et est soit recyclé par la conduite 15 (notamment s'il s'agit d'azote) vers la machine associée utilisant le solvant, soit évacué par la conduite 17 et la cheminée 19. Pendant cette phase, on peut éventuellement réfrigérer le pot 1, par exemple en faisant circuler un fluide froid, notamment de l'eau froide, dans le serpentin 32. Lorsque l'adsorption est terminée, ce que l'on peut déterminer en surveillant la teneur en solvant du gaz contenu dans la conduite 4, on procède à la régénération du charbon actif, de la façon suivante:

**2. *Phase de désorption***

Cette phase (à laquelle correspondent les flèches de la figure 1) comprend des phases successives de préchauffage et d'élution, qui vont être décrites ci-dessous.

En supposant tout d'abord que le gaz épuré est de l'air, on commence par purger cet air, via une conduite 3A reliant la conduite 3 à la cheminée 19, au moyen d'azote prélevé dans la capacité 20.

Un fluide calorigène est envoyé par la centrale 31 dans le serpentin 32 pour préchauffer le charbon actif. Le gaz contenu dans le pot 1 est mis en circulation en boucle fermée via la conduite 5 pour améliorer l'échange thermique, jusqu'à ce que l'analyseur 12 détecte une teneur prédéterminée en solvant. La vanne 11 est alors ouverte, et un flux continu d'azote chauffé à 130°C, provenant de la capacité 20, est admis via la conduite 4 dans le pot 1 et en ressort par la conduite 10 à une température de 100 à 130°C. Les calories de l'azote sortant du pot 1 sont partiellement récupérées au moyen de l'échangeur de chaleur 33 pour porter vers 60°C le flux entrant d'azote prélevé dans la capacité 20. On poursuit cette élution tant que la teneur en solvant de l'azote sortant du pot 1 est suffisante. Dès que l'analyseur 12 détecte une baisse prédétérminée de cette teneur, il ferme la vanne 11, et l'on procède à une nouvelle phase d'adsorption.

Si le gaz épuré est de l'azote, aucune purge préalable du pot 1 n'est nécessaire, et c'est le gaz contenu dans ce pot que l'on fait circuler en boucle fermée en début de désorption.

Dans tous les cas, on poursuit le chauffage par le serpentin 32 pendant toute la désorption.

Lorsque la désorption est terminée, la masse de charbon actif est à une température élevée, qu'il faut abaisser avant de commencer une nouvelle phase d'adsorption. Pour cela, on peut faire circuler un fluide froid dans le serpentin 32 et/ou faire passer, au moins tant que le niveau de température reste suffisamment élevé, un courant d'azote gazeux non chauffé à travers la masse de charbon. Le gaz chaud récupéré en sortie peut être soit utilisé directement comme fluide de désorption d'un autre pot épurateur de l'installation, soit dirigé vers un échangeur accumulateur de chaleur pour utilisation ultérieure des calories. Pendant la phase de refroidissement, il est avantageux, afin d'homogénéiser les échanges thermiques, de faire circuler en boucle fermée via la conduite 5 le gaz contenu dans le pot 1 ou une charge d'azote, comme précédemment.

**3. *Récupération du solvant***

Le gaz sortant de l'echangeur 33 traverse successivement un dévésiculeur 34 puis les échangeurs de chaleur 24, 25 et 26, ce dernier étant maintenu à une température froide, par exemple –80 à –100°C, comprise entre les points de condensation et de solidification du solvant. Le gaz sortant de l'échangeur 26 traverse un dévésiculeur 35, puis (il s'agit maintenant d'azote épuré) l'échangeur 25 à contre-courant du gaz provenant de l'échangeur 24; suivant sa teneur résiduelle en solvant mesurée par un analyseur 36, l'azote sortant de l'échangeur 25 est soit renvoyé vers la capacité 20, soit évacué par la cheminée 19.

Ainsi, le solvant liquide est récupéré principalement par la purge 27 de l'échangeur 26, et secondairement dans le dévésiculeur 35 (goutelettes entraînées par le flux d'azote). Dans certains cas, une récupération des goutelettes peut également avoir lieu au niveau du dévésiculeur 34 et de l'échangeur 24.

La boucle 28 servant à réfrigérer l'échangeur final 26 est maintenue à température constante en vaporisant dans l'échangeur 29 un débit d'azote liquide commandé par une vanne 37 pilotée par une sonde de température 38 branchée sur cette boucle. L'azote ainsi vaporisé, sortant de l'échangeur 29 vers –100°C, traverse ensuite l'échangeur 25 à contre-courant du gaz provenant de l'échangeur 24, puis est, au moins en partie, envoyé à la capacité 20.

L'azote qui sert à refroidir le piège 2 est en général largement excédentaire par rapport aux besoins d'azote pour la désorption du pot 1, et l'azote en excès peut être évacué par la cheminée 19 ou être utilisé, par exemple pour mettre sous atmosphère inerte tout ou partie de la machine associée utilisant le solvant. Cependant, pour des raisons de sécurité et en cas de besoin, il est également prévu une alimentation directe de la capacité 20 à partir du stockage 30, via une conduite 39, et une conduite 40 reliant cette capacité à la cheminée, les conduites 39 et 40 étant commandées de façon à maintenir en permanence la pression de la capacité 20 entre des valeurs basse et haute BP et HP prédéterminées.

Dans certain cas, au contraire, l'azote vaporisé pour refroidir le piège 2 peut être insuffisant pour assurer la désorption du pot 1. Dans de tels cas, on complètera cet azote gazeux par de l'azote gazeux provenant d'une source appropriée (évaporateur ou cadre de bouteilles).

Dans tous les cas, le piégeage frigorifique agit sur un flux gazeux nettement plus concerné en solvant que le gaz de départ à traiter, ce qui conduit pour le piège 2 à un gain considérable en investissement et en frigories par rapport à un piégeage frigorifique exercé directement sur le gaz de départ. Si par exemple ce dernier contient 2 g/m$^3$ de solvant, l'azote de désorption peut en contenir 300 g/m$^3$. Cet avantage importante subsisterait dans le cas d'une variante où l'azote de désorption ne circulerait pas en boucle fermée avant d'être envoyé vers le piège 2, à condition de prévoir un préchauffage du pot 1 suffisant pour atteindre une température de désorption convenable (130°C dans l'exemple décrit plus haut).

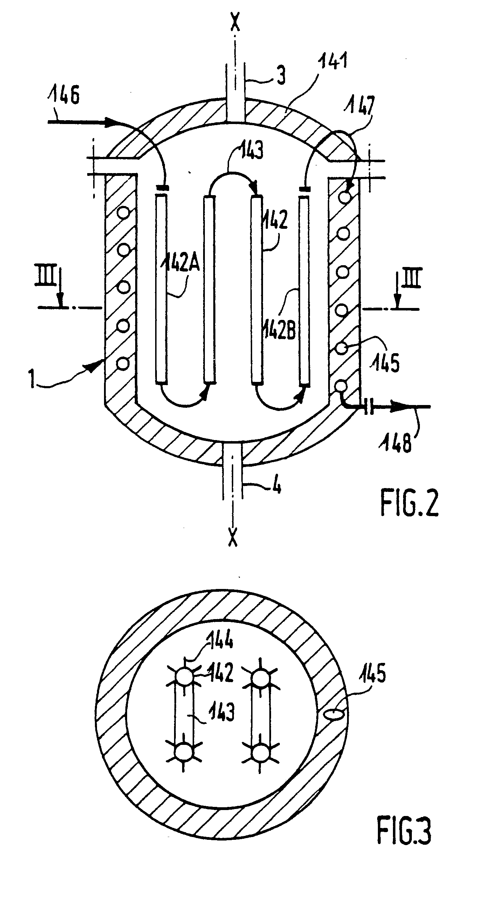

Le pot adsorbeur 1 illustré aux figures 2 et 3 peut avantageusement être utilisé dans l'installation de la figure 1. Il comprend un couvercle supérieur amovible 141 et, dans la masse de charbon actif, un certain nombre de tubes d'échange de chaleur 142 reliés en série par des coudes 143 et remplaçant le serpentin 32 de la figure 1. Ces tubes 142, qui ont été ramenés dans un même plan à la figure 2 pour plus de clarté, sont parallèles à l'axe X-X du pot et équipés d'ailettes extérieures longitudinales 144 visibles à l figure 3. La paroi cylindrique de pot est munie d'un serpentin 145. Le premier tube 142 A peut être relié par une conduite 146 à une source d'un fluide de chauffage ou de refroidissement, le dernier tube 142 B peut être relié par une conduite 147 à l'entrée du serpentin 145, et la sortie de ce dernier peut être reliée à une conduite 148 d'évacuation dudit fluide.

Dans le cas où le gaz traité est de l'air, en l'absence de précaution particulière, le charbon actif peut retenir avec le solvant tout ou partie de l'humidité que cet air contient. Par suite, lors de la désorption-régénération du charbon, l'azote d'élution se charge non seulement du solvant à récupérer, mais également d'eau, et cette eau se retrouve condensée dans le piège frigorifique 2. Outre les risques résultants de bouchage des parties froides de ce piège, ceci diminue la qualité du solvant récupéré en donnant soit une solution, pour les solvants hydrosolubles, soit une émulsion ou un mélange hétérogène pour les solvants non hydrosolubles. Il est donc nécessaire soit de redistiller le liquide récupéré soit de le décanter; on perd alors un des avantages de la régénération du charbon actif à l'azote par rapport au procédé à la vapeur d'eau, à savoir l'obtention d'un solvant directement valorisable par réutilisation.

Comme représenté en trait mixte à la figure 1, on peut éviter cet inonvénient en éliminant l'eau en amont du piège 2 au moyen d'un pot adsorbeur garni d'un tamis moléculaire spécialisé dans le rétention d'eau et ayant en particulier la propriété de retenir l'humidité et de laisser passer le solvant.

A des fréquences déterminées par la saturation du tamis moléculaire, dépendant elle-même de l'umidité relative de l'air chargé du solvant à récupérer, on régénère le tamis moléculaire par un flux d'azote chaud, à la température préconisée par le fabricant du tamis moléculaire, soit 200 à 250°C. Le flux sortant constitué d'azote et de vapeur d'eau rejoint la cheminée 19 pour être évacué.

Dans une première variante (non représentée), l'humidité de l'eau traité est éliminée en tête d'installation, avant le passage sur charbon actif, par passage du flux d'air chargé de solvant dans un lit de tamis moléculaire dessécheur disposé dans la conduite 7. Ainsi, la conduite 10 ne véhicule que du gaz sec chargé de solvant que l'on condense dans le piège 2.

Avec un tel montage, on arrête la totalité de l'humidité de l'air entrant, alors que le charbon actif ne piège généralement qu'une fraction de cette humidité en l'absence de tamis moléculaire en tête de l'installation. Il est pour cette raison plus avantageux d'avor recours au montage illustré en trait mixte à la figure 1: un lit de tamis moléculaire 41 est interposé dans le circuit menant du pot 1 au piège 2, et de préférence entre le dévésiculeur 34 et le premier échangeur de chaleur 24 du piège 2.

Dans les deux variantes ci-dessus, comme il est classique, on utilise avantageusement deux lits de tamis moléculaire en parallèle, l'un étant en phase d'adsorption d'eau, l'autre en phase de désorption. De plus, le tamis moléculaire est régénéré par un flux d'azote chaud prélevé dans la capacité 20 par une conduite 42 pourvu d'un réchauffeur 43. L'azote chargé d'eau s'évacue ensuite par la cheminée 19 via une conduite 44.

Par ailleurs, dans les deux variantes, une amélioration sensible des bilans de consommation d'azote peut être obtenue en utilisant un préchauffage du lit de tamis moléculaire analogue à celui décrit plus haut pour le pot 1. En effet, la régénération du tamis moléculaire exige l'emploi d'un balayage de gaz à une température de 200 à 250°C. Or la chaleur sensible de l'azote est très faible, et il en faut donc un grand volume pour apporter la chaleur nécessaire au chauffage de l'adsorbant jusqu'à 200 à 250°C puis celle correspondant à l'enthalpie d'évaporation de l'eau.

C'est pourquoi on dispose de préférence le tamis moléculaire dessécheur dans un pot du type de celui représenté sur les figures 2 et 3. Il est alors possible de faire parcourir l'échangeur de chaleur dont est muni ce pot par un fluide chaud, par exemple de la vapeur surchauffée à 150-200°C, pour préchauffer le lit d'adsorbant. Un balayage à l'azote, simultané et/ou postérieur au préchauffage, permet d'entraîner aux moindres frais l'eau adsorbée. Comme dans le cas du pot 1, le préchauffage peut s'accompagner d'une circulation d'azote en boucle fermée. Pour le retour du tamis à la température froide d'adsorption de l'eau, on procède comme décrit plus haut pour le pot 1.

**Revendications**

1. Procédé d'épuration d'un gaz comprenant une phase d'adsorption sur charbon actif, et une phase de régénération de ce dernier par désorption, caractérisé en ce qu'on désorbe le charbon actif en faisant passer un courant de gaz inerte à travers le charbon actif puis dans un piège frigorifique (2) maintenu à une température de condensation de l'impureté du gaz traité et refroidi par vaporisation dudit gaz inerte stocké sous forme liquide, une partie au moins du gaz inerte ainsi vaporisé étant utilisé pour effectuer la désorption du charbon actif.

2. Procédé suivant la revendication 1, caractérisé en ce que la désorption comprend une phase de préchauffage dans laquelle on fait circuler une charge de gaz inerte en boucle fermée à travers le charbon actif jusqu'à ce que sa teneur en impureté atteigne un seuil prédéterminé, et une phase d'élution dans laquelle on fait circuler un flux de gaz inerte à travers le charbon actif et on l'envoie vers le piège frigorifique (2).

3. Procédé suivant l'une quelconque des revendications 1 et 2, caractérisé en ce qu'on chauffe le charbon actif et/ou le gaz inerte pendant l'opération de désorption.

4. Procédé suivant la revendication 3, caractérisé en ce qu'on refroidit le charbon actif après la fin de l'opération de désorption et/ou pendant la phase d'adsorption.

5. Procédé suivant l'une des revendications 3 et 4, caractérisé en ce que, pendant la phase de chauffage et/ou pendant la phase de refroidissement, on fait circuler une charge de gaz inerte en boucle fermée à travers le charbon actif.

6. Procédé suivant l'une quelconques des revendications 1 à 5, caractérisé en ce qu'on utilise au moins une partie du gaz inerte vaporisé pour inerter une machine d'où provient le gaz à traiter.

7. Procédé suivant l'une quelconque des revendications 1 à 6, pour l'épuration d'un gaz humide, caractérisé en ce qu'on fait passer au préalable ce gaz à travers un lit de tamis moléculaire.

8. Procédé suivant l'une quelconque des revendications 1 à 6, pour l'épuration d'un gaz humide, caractérisé en ce qu'on fait passer le gaz de désorption à travers un lit de tamis moléculaire (41) entre sa sortie de charbon actif et son entrée dans le piège frigorifique (2).

9. Procédé suivant l'une quelconque des revendications 1 à 8, caractérisé en ce qu'on régénère le tamis moléculaire (44) au moyen d'un courant chauffé dudit gaz inerte, de préférence avec préchauffage du tamis moléculaire.

10. Installation pour la mise en oeuvre d'un procédé suivant l'une quelconque des revendications 1 à 9, du type comprenant un pot adsorbeur (1) empli de charbon actif, caractérisée en ce qu'elle comprend des moyens (29) pour vaporiser un gaz inerte liquéfié, des moyens (13, 20) d'alimentation du pot adsorbeur avec une partie au moins du gaz inerte ainsi vaporisé, et des moyens (2) pour refroidir le gaz sortant dudit pot (1) par échange de chaleur avec le gaz inerte en cours de vaporisation.

11. Installation suivant la revendication 10, caractérisée en ce qu'elle comprend des moyens (5, 6) pour faire circuler en boucle fermée le gaz contenu dans le pot adsorbeur (1).

12. Installation suivant la revendication 11, caractérisée en ce qu'elle comporte un lit de tamis moléculaire (41) interposé entre le pot adsorbeur (1) et le piège frigorifique (2).

13. Pot adsorbeur (1) à charbon actif, notamment pour une installation suivant l'une quelconque des revendications 10 à 13, caractérisé en ce qu'il comprend des tubes d'échange de chaleur (142) disposés longitudinalement dans le pot et munis d'ailettes longitudinales (144) ces tubes (142) étant montés en série avec des moyens (145) de circulation de fluide disposés dans la paroi latérale du pot adsorbeur.

**Patentansprüche**

1. Verfahren zur Reinigung eines Gases mit einer Phase einer Adsorption auf Aktivkohle und einer Phase einer Regenerierung der letzteren durch Desorption, dadurch gekennzeichnet, dass man die Aktivkohle desorbiert, indem man einen Inertgasstrom über die Aktivkohle und dann in eine Kühlfalle (2) gehen lässt, welche auf einer Kondensationstemperatur der Verunreinigung des behandelten Gases gehalten wird und durch Verdampfung des in flüssiger Form gelagerten Inertgases gekühlt wird, wobei wenigstens ein Teil des so verdampften Inertgases benutzt wird, um die Desorption der Aktivkohle zu bewirken.

2. Verfahren nach Anspruch 1, dadurch gekennzeichnet, dass die Desorption eine Vorerwärmungsphase, bei welcher man eine Inertgasmenge in geschlossener Schleife über die Aktivkohle gehen lässt, bis ihr Gehalt an Verunreinigung einen vorbestimmten Schwellenwert erreicht, und eine Eluierphase, in welcher man einen Strom des Inertgases über die Aktivkohle zirkulieren lässt und zu der Kühlfalle (2) schickt, umfasst.

3. Verfahren nach einem der Ansprüche 1 und 2, dadurch gekennzeichnet, dass man die Aktivkohle und/oder das Inertgas während der Desorption erwärmt.

4. Verfahren nach Anspruch 3, dadurch gekennzeichnet, dass man die Aktivkohle nach dem Ende der Desorption und/oder während der Adsorptionsphase kühlt.

5. Verfahren nach einem der Ansprüche 3 und 4, dadurch gekennzeichnet, dass man während der Phase des Erwärmens und/oder während der Phase des Kühlens eine Menge Inertgas in geschlossener Schleife über die Aktivkohle zirkulieren lässt.

6. Verfahren nach einem der Ansprüche 1 bis 5, dadurch gekennzeichnet, dass man wenigstens einen Teil des verdampften Inertgases benutzt, um eine Maschine inert zu machen, von wo das zu behandelnde Gas stammt.

7. Verfahren nach einem der Ansprüche 1 bis 6 zur Reinigung eines feuchten Gases, dadurch gekennzeichnet, dass man vorher dieses Gas über ein Molekularsiebbett gehen lässt.

8. Verfahren nach einem der Ansprüche 1 bis 6 zur Reinigung eines feuchten Gases, dadurch gekennzeichnet, dass man Desorptionsgas über ein Molekularsiebbett (41) zwischen seinem Austreten aus der Aktivkohle und seinem Eintreten in die Kühlfalle (2) gehen lässt.

9. Verfahren nach einem der Ansprüche 1 bis 8, dadurch gekennzeichnet, dass man das Molekularsieb (44) mit Hilfe eines erwärmten Stromes dieses Inertgases, vorzugsweise mit Vorerwärmen des Molekularsiebes, regeneriert.

10. Vorrichtung zur Durchführung eines Verfahrens nach einem der Ansprüche 1 bis 9 mit einem mit Aktivkohle gefüllten Adsorbertopf (1), dadurch gekennzeichnet, dass sie Einrichtungen (29) zum Verdampfen eines verflüssigten Inertgases, Einrichtungen (13, 20) zur Einspeisung wenigstens eines Teils des so verdampften Inertgases in den Adsorbertopf und Einrichtungen (2) zur Kühlung des diesen Topf (1) verlassenden Gases durch Wärmeaustausch mit dem Inertgas im Verlaufe der Verdampfung aufweist.

11. Vorrichtung nach Anspruch 10, dadurch gekennzeichnet, dass sie Einrichtungen (5, 6) aufweist, um in geschlossener Schleife das in dem Adsorbertopf (1) enthaltene Gas zirkulieren zu lassen.

12. Vorrichtung nach Anspruch 11, dadurch gekennzeichnet, dass sie ein Molekularsiebbett (41) besitzt, das zwischen dem Adsorbertopf (1) und der Kühlfalle (2) eingeschaltet ist.

13. Adsorbertopf (1) mit Aktivkohle, insbesondere für eine Vorrichtung nach einem der Ansprüche 10 bis 13, dadurch gekennzeichnet, dass er Wärmeaustauscherröhren (142) besitzt, die in Längsrichtung in dem Topf angeordnet und mit Längsflügeln (144) ausgestattet sind, wobei diese Röhren (142) in Reihe mit Einrichtungen (145) zur Fliessmittelzirkulation, die in der Seitenwand des Adsorbertopfes angeordnet sind, montiert sind.

## Claims

1. A gas purification process including an adsorption stage over activated charcoal and a stage for regeneration by desorption of the latter, characterised in that the activated charcoal is desorbed by causing a flow of inert gas to pass through the activated carbon and then into a cooling trap (2) kept at a condensation temperature of the impurity of the gas being processed and cooled by vapourisation of the said inert gas stored in liquid form, at least a part of the inert gas thus vapourised being utliised to effect the desorption of the activated charcoal.

2. Process according to claim 1, caracterised in that the desorption includes a preheating stage in which a charge of inert gas is caused to circulate in a closed loop through the activated charcoal until its impurity content reaches a predetermined threshold, and an elution stage in which a flow of inert gas is caused to circulare through the activated charcoal and is conveyed towards the cooling trap (2).

3. Process according to either of the claims 1 and 2, characterised in that the activated charcoal and/or the inert gas is heated during the desorption operation.

4. Process according to claim 3, characterised in that the activated charcoal is cooled after the end of the desorption operation and/or during the adsorption stage.

5. Process according to one of claims 3 and 4, characterised in that a charge of inert gas is caused to circulate in a closed loop through the activated carbon during the heating stage and/or during the cooling stage.

6. Process according to any one of claims 1 to 5, characterised in that at least a part of the vapourised inert gas is used for rendering a machine from which originates the gas to be processed.

7. Process according to any one of claims 1 to 6, for purification of a humid gas, characterised in that this gas is initially caused to pass through a molecular sieve bed.

8. Process according to any one of the claims 1 to 6, for the purification of a damp gas, characterised in that the desorption gas is caused to pass through a molecular sieve bed (41) between its leaving the activated charcoal and its entry into the cooling trap (2).

9. Process according to any one of the claims 1 to 8, characterised in that the molecular sieve (44) is regenerated by means of a heated flow of the said inert gas, preferably with preheating of the molecular sieve.

10. Plant for carrying out a process according to any one of claims 1 to 9, of the type comprising an adsorption vessel (1) filled with activated charcoal, characterised in that it comprises means (29) for vapourising a liquefied inert gas, means (13, 20) for supplying the adsorption vessel with at least a part of the inert gas thus vapourised and means (2) for cooling the gas issuing from the said vessel (1) by heat exchange with the inert gas in process of being vapourised.

11. Plant according to claim 10, characterised in that it comprises means (5, 6) for causing the gas contained in the adsorption vessel (1) to circulate in a closed loop.

12. Plant according to claim 11, characterised in that it comprises a molecular sieve bed (41) interposed between the adsorption vessel (1) and the cooling trap (2).

13. Adsorption vessel (1) containing activated charcoal, in particular for a plant according to any one of the claims 10 to 13, characterised in that it comprises heat exchange pipes (142) arranged longitudinally in the vessel and provided with longitudinal fins (144) these pipes (142) being arranged in series with fluid circulating means (145) situated in the sidewall of the adsorption vessel.

FIG.1

FIG.2

FIG.3